# EUROPÄISCHE PATENTSCHRIFT

(11) **EP 3 575 668 B1**
(45) Veröffentlichungstag und Bekanntmachung des Hinweises auf die Patenterteilung: **07.10.2020**
(21) Anmeldenummer: 18185283.1
(22) Anmeldetag: 24.07.2018
(51) Int. Cl.: F17C 13/04

(54) **SELBSTDICHTENDER VENTILANSCHLUSS FÜR DRUCKBEHÄLTER**
SELF-SEALING VALVE CONNECTION FOR PRESSURE VESSEL
RACCORD DE SOUPAPE AUTOÉTANCHÉIFIÉ POUR RÉSERVOIR SOUS PRESSION

(30) Priorität: 29.05.2018 EP 18174701
(43) Veröffentlichungstag der Anmeldung: 04.12.2019
(73) Patentinhaber: NPROXX B.V., 6422 RK Heerlen (NL)
(72) Erfinder: Kronholz, Stephan, 52428 Jülich (DE); Zimmermann, Edwin, 52223 Stolberg (DE); Krath, Wilhelm, 52379 Langerwehe (DE); Mülheims, Josef, 52428 Jülich (DE)
(74) Vertreter: FARAGO Patentanwälte

(56) Entgegenhaltungen:
- DE-A1-102009 008 051
- DE-A1-102014 207 069
- DE-C1- 19 751 411
- US-A1- 2017 268 724

## Beschreibung

### Gebiet der Erfindung

Die Erfindung betrifft einen Druckbehälter mit einem selbstdichtenden Ventilanschlussstück und ein Verfahren zur Herstellung eines solchen Druckbehälters.

### Hintergrund der Erfindung

Der Markt für Druckbehälter, die mit Faserverbundmaterial verstärkt werden, wächst kontinuierlich. Die zunehmende Förderung von Erdgas und Fracking-Gas macht speziell in Ländern ohne entsprechendes Pipelinenetz eine Speicherung in Druckbehältern erforderlich. Hinzu kommt der Automobilsektor, der stark an der Entwicklung von Brennstoffzellen-Fahrzeugen arbeitet, bei denen der Brennstoff in Form von gasförmigem Wasserstoff unter hohem Druck in Druckbehältern gespeichert werden soll. Für den Transport der Druckbehälter sind leichte Druckbehälter gewünscht, da ein Transport von Druckbehältern mit hohen Behältergewichten unnötig viel Energie verbraucht und daher zu hohe Transportkosen verursacht.

Hierbei müssen die Druckbehälter mit einem unter Hochdruck im Druckbehälter gespeicherten Füllgas über einen großen Temperaturbereich und über einen langen Zeitraum zuverlässig unter alternierenden Lastzuständen (Entleerung des Druckbehälters, Wiederbefüllung des Druckbehälters und so weiter) der Norm und/oder den Kundenanforderungen entsprechend dicht sein. Druckbehälter nach dem Stand der Technik versuchen über O-Ring-Dichtungen die Gasdichtigkeit herzustellen. Eine Redundanz für die abdichtende Stelle liegt nicht vor und führt daher leicht zu einem Versagen der Dichtung, sofern sich die Sitz- und Passverhältnisse des O-Rings relativ zu den anderen Komponenten ändern.

Aus dem deutschen Patent DE 197 51 411 C1 ist ein Composite-Druckbehälter zur Speicherung von gasförmigen Medien unter Druck mit einem Liner aus Kunststoff und zwei im Halsbereich angeordneten Halsstücken sowie mit einer den Liner verstärkenden Wicklung eines Faserverbundwerkstoffes bekannt. Im das Ventil aufnehmenden Halsstück ist ein in diesem einschraubbarer Klemmring vorgesehen, der am Außenmantel einen Gewindeabschnitt aufweist, an den sich ein gewindefreier kegelstumpfartiger Abschnitt anschließt und die zwischen den Innengewindeabschnitten des Halsstückes angeordnete ringförmige Nut zur Aufnahme eines Dichtringes radial in das Halsstück sich erstreckt und auf der Außenseite des jeweiligen Halsstückes im an den Kragen anschließenden Bereich die Anordnung mindestens einer radial nach außen über den ganzen Umfang sich erstreckenden Sicke vorgesehen ist.

Aus der deutschen Offenlegungsschrift DE10 2009 008 051 A1 ist eine Dichtungsanordnung offenbart, die ein Trägerelement, eine erste Dichtung, eine zweite Dichtung, die von der ersten Dichtung beabstandet ist, und eine dritte Dichtung aufweist, wobei die erste Dichtung einer Leckage von Fluid entgegenwirkt, wenn ein Inneres eines abzudichtenden Gegenstandes Temperaturen unterhalb einer vorbestimmten Temperatur und/oder Drücken unterhalb eines vorbestimmten Druckes ausgesetzt wird, und die zweite Dichtung und die dritte Dichtung der Leckage von Fluid entgegenwirken, wenn das Innere des abzudichtenden Gegenstandes Temperaturen oberhalb der vorbestimmten Temperatur und/oder Drücken oberhalb des vorbestimmten Druckes ausgesetzt ist.

Aus der deutschen Offenlegungsschrift DE 10 2014 207 069 A1 ist ein ein Anschlusselement für einen Drucktank bekannt, wobei das Anschlusselement in eine Öffnung des Drucktanks einführbar ist, umfassend ein Stopfenelement sowie ein das Stopfenelement zumindest teilweise umschließendes Gegenelement, wobei eine Außenseite des Stopfenelements und eine Innenseite des Gegenelements eine sich verjüngende Aussparung bilden, so dass eine Tankwand des Drucktanks in der Aussparung das Anschlusselements einklemmbar ist.

Aus der US-amerikanischen Offenlegungsschrift US2017 / 268 724 A1 ist ein Druckbehälter bekannt, wobei der Druckbehälter eine Harzauskleidung, eine Basis, eine Dichtung und einen Kragen aufwesit. Die Harzauskleidung enthält Flüssigkeit. Die Harzauskleidung hat einen rohrförmigen Abschnitt, über den eine Innenseite der Harzauskleidung mit einer Außenseite der Harzauskleidung in Verbindung steht. Die Basis enthält ein Zufuhr- / Abfuhrloch, in das der rohrförmige Abschnitt eingesetzt ist. Die Dichtung ist zwischen dem rohrförmigen Abschnitt und der Basis in der Zufuhr- / Abfuhröffnung vorgesehen. Der Kragen hat ein Durchgangsloch und ist in den rohrförmigen Abschnitt eingesetzt.

Es ist daher wünschenswert, einen Ventilanschluss für Druckbehälter zur Verfügung zu haben, der selbstdichtend ist und eine dauerhafte und zuverlässige Abdichtung des Ventilanschlusses gegen den Innenbehälter gewährleistet.

### Zusammenfassung der Erfindung

Es ist eine Aufgabe der vorliegenden Erfindung, einen Druckbehälter mit einem Ventilanschluss zur Verfügung zu stellen, der selbstdichtend ist und eine dauerhafte und zuverlässige Abdichtung des Ventilanschlusses gegen den Innenbehälter gewährleistet.

Diese Aufgabe wird gelöst durch einen Druckbehälter umfassend einen Innenbehälter mit einer Innen- und Außenseite aus einem unter Druck zumindest teilweise plastisch verformbaren Innenbehältermaterial mit einer Zylinderachse und zumindest mit zwei den Innenbehälter mitformenden Polkappen zur Bereitstellung eines Speichervolumens im Druckbehälter, eine auf den Innenbehälter zu dessen Verstärkung aufgebrachten Außenschicht, und ein Ventilanschlussstück mit Dichtkonus und Außenstück angeordnet auf einer der Polkappen zur Aufnahme eines Ventils und zur Abdichtung des Speichervolumens gegenüber dem Innenbehälter, wobei der Innenbehälter zum Anschließen des Ventilanschlussstücks eine zylinderförmig aus der Außenseite der Polkappe hervorragende zum Speichervolumen hin innen offene Auswölbung umfasst, wobei der Dichtkonus an einer Innenseite der Auswölbung und das Außenstück zur Erzeugung eines Abdichtdrucks zwischen Dichtkonus, Auswölbung und Außenstück auf einer Außenseite der Auswölbung positioniert ist, wobei das Außenstück auf seiner zur Auswölbung ausgerichteten Seite eine geeignet geformte Nut (beziehungsweise Vertiefung) mit einer dem Speichervolumen zugewandten ersten Kante und einer in entgegengesetzter Richtung vorhandenen zweiten Kante zur Aufnahme eines unter dem Abdichtdruck abdichtenden Dichtungsrings aufweist, wobei die Nut und der Dichtungsring so dimensioniert sind und das Innenbehältermaterial dazu vorgesehen ist, unter dem Abdichtdruck aufgrund seiner plastischen Verformbarkeit zumindest in beiden Lücken zwischen Dichtungsring und erster sowie zweiter Kante hineinragende erste und zweite Dichtungswülste auszubilden.

Der Innenbehälter ist hier mehrteilig zumindest aus zwei Polkappen zusammengesetzt, die erst zu einem gemeinsamen Innenbehälter nach Einsatz des Dichtkonus von innen in die Polkappe und Aufsetzen des Außenstücks von außen auf die Polkappe mit so hergestellter Abdichtung zwischen Außenstück, Auswölbung (oder Auskragung) der Polkappe und Dichtkonus weiterverarbeitet werden. Das plastisch verformbaren Innenbehältermaterial hat die Eigenschaft, zwar in sich fest und stabil zu sein, allerdings mit einer gewissen Fließfähigkeit ausgestattet zu sein, sodass es sich zumindest an seiner Oberfläche unter hohem Druck plastisch verformen und somit an die Kontur der drückenden Flächen anpassen kann, ohne aber dabei großflächige Verformungen entstehen zu lassen. Der Innenbehälter hat zudem die Funktion, ein gasdichtes Speichervolumen für die Speicherung von Füllgas im Druckbehälter bereitzustellen, so dass das Innenbehältermaterial gasdicht sein sollte, beispielweise Metall oder Kunststoff, als Kunststoff vorzugsweise PA oder PE, als Einzelschicht oder als Mehrfachschichtsystem. Das Füllgas kann dabei ein beliebiges Gas sein, beispielsweise Wasserstoff. Die Außenschicht verleiht dem Druckbehälter eine mechanische Stabilität, sodass die Funktionalität der Gasundurchlässigkeit und Druckfestigkeit auf die zwei Komponenten Innenbehälter und Außenschicht separiert wurde. Die Außenschicht kann beispielsweise eine Faserverbundschicht sein, die auf den Innenbehälter gewickelt oder mit anderen Techniken aufgebracht wurde.

Der Innenbehälter kann dabei aus lediglich zwei Polkappen zusammengesetzt sein, wobei eine oder beide der Polkappen einen zylinderförmig ausgestalteten Randbereich umfassen kann. Hierbei werden die Ränder der Polkappen zur Herstellung des Innenbehälters direkt aneinandergesetzt und geeignet miteinander verbunden. Alternativ kann der Innenbehälter auch zusätzlich zu den Polkappen ein zylindrisches Mittelteil umfassen, das vorzugsweise aus demselben Material wie die Polkappen hergestellt ist. Der Begriff der mitformenden Polkappen bezeichnet einerseits, dass alleine die Polkappen den Innenbehälter formen als auch dass die Polkappen einen zylindrisch ausgeführten Randbereich umfassen, der im späteren Innenbehälter zwischen der eigentlichen Polkappenform angeordnet ist, und andererseits, dass ein separates Mittelteil zur Bildung des Innenbehälters zwischen den Polkappen angeordnet ist. Die Zylinderachse entspricht der Symmetrieachse des zylindrischen Abschnitts des Innenbehälters oder im Falle lediglich zweier aufeinandergesetzter Polkappen die

Achse zwischen den Mittelpunkten beziehungsweise zentralen Punkten der jeweiligen Polkappen, die auch die höchsten Erhebungen der jeweiligen Dome gebildet durch die Polkappen entsprechen.

Der in der Nut positionierte Dichtungsring füllt die Nut in dem Außenstück nicht vollständig aus, sondern lässt in der Nut auf beiden Seiten zur Innenseite des Außenstücks Lücken, eine erste und zweite Lücke, die für die Bereitstellung einer Redundanz in der Dichtwirkung verwendet werden. Die Ausgestaltung der Komponenten des Ventilanschlussstücks und der Auswölbung des Innenbehälters stellen in Verbindung mit der geeigneten Fließfähigkeit des Innenbehältermaterials und die dadurch bewirkte Ausbildung der Dichtungswülste sicher, dass für den Druckbehälter eine verbesserte Abdichtwirkung mit gleichzeitiger Positionssicherheit der Komponenten des Ventilanschlussstücks im Druckbehälter gewährleistet ist. Zudem bleibt der Dichtungsring bei Druckwechsel durch die beiden Dichtungswülste dauerstabil in der Nut. Dieses Dichtungskonzept stellt eine Dreifach-Redundanz zum Abdichten des Speichervolumens dar, indem eine Abdichtung von (i) erster Dichtungswulst der Auswölbung gegen das Außenstück, (ii) Dichtkonus über Auswölbung auf Dichtungsring und (iii) zweiter Dichtungswulst der Auswölbung gegen das Außenstück eine dreifache Abdichtung in Reihe bereitstellt und somit die Zuverlässigkeit und Dauerhaftigkeit der Abdichtung enorm verbessert. Durch die Ausbildung der Dichtungswülste aufgrund des durch das Ventilanschlussstück ausgeübten Abdichtdruck ist das Ventilanschlussstück somit zusätzlich selbstabdichtend. Das Dichtungskonzept ist dabei unabhängig vom Material des Dichtkonus und des Anschlussstücks, wobei die Materialien für Dichtkonus und Anschlussstück allerdings eine zumindest geringfügigere Fließfähigkeit als das Innenbehältermaterial aufweisen.

Der spezifizierte Druckbehälter ist durch das erfindungsgemäße Dichtungskonzept sehr flexibel aufgebaut, sodass kundenspezifische Ventilanschlussstücke über entsprechende Formung der Auswölbung und des Dichtkonus leicht zu adaptieren sind. Zusätzlich ist eine Integration einer zusätzlichen Hülse zur Integration von Sensorik, Messfühlern oder anderer in den Druckbehälter ragenden Bauteil weiterhin möglich.

Der erfindungsgemäße Druckbehälter stellt somit einen Druckbehälter mit einem Ventilanschluss dar, der selbstdichtend ist und eine dauerhafte und zuverlässige Abdichtung des Ventilanschlusses gegen den Innenbehälter gewährleistet.

In einer Ausführungsform ist der Dichtkonus so dimensioniert, dass das Innenbehältermaterial aufgrund seiner plastischen Verformbarkeit einen dritten Wulst um den Dichtkonus auf seiner zum Speichervolumen hin gerichteten Unterseite auszubilden. Dadurch wird ein Verrutschen des Dichtkonus in Richtung des Speichervolumens verhindert. Dadurch wird der Abdichtdruck auf den Dichtungsring wie ursprünglich eingestellt aufrechterhalten. Außerdem kann so der Dichtkonus nicht mehr bei Erschütterung des Druckbehälters in das Speichervolumen hineinrutschen oder gar hineinfallen.

In einer weiteren Ausführungsform ist der Dichtkonus oder das Außenstück so geformt, dass zwischen dem Speichervolumen und einer Oberseite der Auswölbung eine offene Gasverbindung zum Speichervolumen besteht. Damit liegt der Innendruck im Speichervolumen auch oben an der Auswölbung des Innenbehälters an.

In einer weiteren Ausführungsform umfasst der Dichtkonus eine der Auswölbung zugewandten Außenseite und eine entgegengesetzte Innenseite, wobei die Fläche der auf der Auswölbung aufliegenden Außenseite des Dichtkonus kleiner ist als dessen Innenseite. Durch das unterschiedliche Flächenverhältnis zwischen Innenseite und Außenseite bei vorhandener Gasverbindung zwischen Speichervolumen und Oberseite der Auswölbung wird der Abdichtdruck durch den Innendruck im Speichervolumen des Druckbehälters zusätzlich verstärkt und der Dichtkonus bei Druckanstieg im Speichervolumen (beispielsweise bei der Befüllung des Speichervolumens mit der Gasfüllung, z.B. bis 500 bar) zusätzlich in Richtung des Außenstücks gepresst, was die Dichtwirkung und deren Zuverlässigkeit noch weiter verbessert.

In einer weiteren Ausführungsform besitzt die Nut (oder Vertiefung) eine Kontur, die an eine Form des Dichtungsrings im unbelasteten Zustand angepasst ist. Damit können sich hinter dem Dichtungsring keine undefinierten Hohlräume mehr bilden, sodass die Dichtwirkung des Dichtungsrings weiter verbessert wird.

In einer weiteren Ausführungsform ist der Dichtungsring ein O-Ring. O-Ringe bieten einerseits zuverlässige Abdichteigenschaften und andererseits lassen sich für O-Ringe am einfachsten geeignete Konturen in der Nut nachbilden. Hierbei ist die Krümmung der Nut an die Krümmung der Oberfläche des O-Rings angepasst. Der Dichtungsring beziehungsweise der O-Ring können dabei aus allen für die Gasabdichtung geeigneten Materialien bestehen.

In einer weiteren Ausführungsform ist das Innenbehältermaterial zumindest für die Auswölbung ein PA-, PE- oder ein Mehrschichtmaterial aus diesen Materialien. Diese Materialien bieten geeignete Eigenschaften zur Herstellung des Innenbehälters aus den Polkappen und einem gegebenenfalls dazwischen angeordneten Mittelteil und stellen zusätzlich eine geeignete Fließfähigkeit des Material zur Ausbildung der Dichtungswülste bereit, wodurch die zusätzliche Abdichtwirkung mit gleichzeitiger Positionssicherheit der Komponenten des Anschlussstücks im Druckbehälter gewährleistet wird. Der Innenbehälter kann dabei auch vollständig aus diesen Materialien gefertigt sein. Obige Materialien lassen sich zudem gut miteinander verschweißen, um aus den Komponenten Polkappen und gegebenenfalls Mittelteil einen Innenbehälter zur Bereitstellung des Speichervolumens herzustellen.

In einer weiteren Ausführungsform umfasst das Ventilanschlussstück ein zusätzliches Sicherungselement, das den Dichtkonus und das Außenstück miteinander verbindet. Damit wird ein Verrutschen des Dichtkonus relativ zum Außenstück, insbesondere in Richtung des Außenstücks, verhindert.

In einer weiteren Ausführungsform ist das Sicherungselement im Außenstück gelagert und umfasst zumindest auf seiner dem Dichtkonus zugewandten Seite ein Gewinde, das zum Eingriff in die Oberseite des Dichtkonus vorgesehen ist.

Das Sicherungselement kann beispielsweise eine Hohlschraube oder ein entsprechend geformter Ring mit Durchlassöffnungen für die Druckbeaufschlagung der Oberseite der Auswölbung des Innenbehälters sein.

In einer weiteren Ausführungsform umfasst das Außenstück des Ventilanschlussstücks Verbindungsmittel zur druckstabilen Aufnahme des Ventils. Beispielsweise wird ein Ventil in ein entsprechendes Gewinde als Verbindungsmittel des Außenstücks druckstabil eingeschraubt.

Die Erfindung betrifft des Weiteren ein Verfahren zur Herstellung eines erfindungsgemäßen Druckbehälters umfassend einen Innenbehälter mit einer Innen- und Außenseite aus einem unter Druck zumindest teilweise plastisch verformbaren Innenbehältermaterial mit einer Zylinderachse und zumindest mit zwei den Innenbehälter mitformenden Polkappen, von denen eine der Polkappen zur Aufnahme eines Ventils ausgestaltet ist, einer auf den Innenbehälter positionierten Außenschicht und ein Ventilanschlussstück mit Dichtkonus und Außenstück, umfassend die nachfolgenden Schritte:
- Bereitstellen der zur Aufnahme eines Ventils ausgestalteten Polkappe, die zum Anschließen des Ventilanschlussstücks eine zylinderförmig aus der Außenseite hervorragende zum späteren Speichervolumen hin innen offene Auswölbung umfasst;
- Aufsetzen des Außenstücks auf die Außenseite der Aussparung, wobei das Außenstück auf seiner zur Auswölbung ausgerichteten Seite eine geeignet geformte Nut mit einer dem späteren Speichervolumen zugewandten ersten Kante und einer in entgegengesetzter Richtung vorhandenen zweiten Kante und einen in der Nut positionierten und unter einem Abdichtdruck abdichtenden Dichtungsring aufweist;
- Einsetzen des Dichtkonus von der Innenseite der Polkappe her in die Innenseite der Aussparung hinein zur Erzeugung eines Abdichtdrucks zwischen Dichtkonus, Auswölbung und Außenstück;
- Ausbilden zumindest von ersten und zweiten Dichtungswülsten, die unter dem Abdichtdruck bei entsprechend dimensionierter Nut und Dichtungsring aufgrund der plastischen Verformbarkeit des Innenbehältermaterials in beide Lücken zwischen Dichtungsring und erster sowie zweiter Kante zur Abdichtung des späteren Speichervolumens gegenüber dem späteren Innenbehälter hineinragen;
- Fertigstellung des Innenbehälters durch geeignetes Verbinden zumindest der beiden Polkappen zur Bereitstellung des Speichervolumens für den Druckbehälter;
- Herstellen der Außenschicht auf den Innenbehälter zur Verstärkung des Druckbehälters; und
- Aufsetzen des Ventils in das Ventilanschlussstück zum Verschluss des Druckbehälters.

Die Außenschicht kann hierbei beispielsweise eine Faserverbundschicht sein, die auf den Innenbehälter gewickelt oder mit anderen Techniken aufgebracht ist. Die Schritte des Aufsetzens des Außenstücks und des Einsetzens des Dichtkonus können dabei in beliebiger zeitlicher Reihenfolge ausgeführt werden. Die oben spezifizierte Reihenfolge der Verfahrensschritte liefert aber Druckbehälter mit besseren Druckeigenschaften.

Der erfindungsgemäße Verfahren stellt somit einen Druckbehälter mit einem Ventilanschluss zur Verfügung, der selbstdichtend ist und eine dauerhafte und zuverlässige Abdichtung des Ventilanschlusses gegen den Innenbehälter gewährleistet.

In einer Ausführungsform des Verfahrens umfasst dieses den weiteren Schritt des Ausbildens einer dritten Wulst um den Dichtkonus auf seiner zum Speichervolumen hin gerichteten Unterseite aufgrund der plastischen Verformbarkeit des Innenbehältermaterials.

In einer weiteren Ausführungsform des Verfahrens besteht die Außenschicht aus Faserverbundmaterial und wird beim Schritt des Herstellens auf den Innenbehälter gewickelt. Da der Innenbehälter selber den Wickeldorn für die Außenschicht darstellt, wird die Außenschicht passgenau für den jeweiligen Innenbehälter hergestellt.

In einer weiteren Ausführungsform des Verfahrens wird das Aufsetzen des Ventils mittels eines Verschraubens durchgeführt. Dazu kann das Außenstück bereits ein entsprechend vorgesehenes Gewinde umfassen oder das Ventil besitzt ein Gewinde, das sich in das Außenstück hineinschneidet.

In einer weiteren Ausführungsform des Verfahrens werden die Polkappen und gegebenenfalls das Mittelteil zur Fertigstellung des Innenbehälters miteinander verschweißt. Eine solche Verschweißung ermöglicht eine einfach und schnell auszuführende Verbindung zwischen den Polkappen direkt beziehungsweise zwischen den Polkappen und dem Mittelteil und ist zudem zuverlässig gasdicht und ausreichend mechanisch belastbar.

Die voranstehend beschriebenen Ausführungsformen können im Rahmen der vorliegenden Erfindung in allen möglichen Kombinationen miteinander verwirklicht werden.

### Kurze Beschreibung der Abbildungen

Diese und andere Aspekte der Erfindung werden im Detail in den Abbildungen wie folgt gezeigt.
- Fig.1:: eine Ausführungsform des erfindungsgemäßen Druckbehälters im seitlichen Schnitt;
- Fig.2:: der in Fig. 1 gezeigte Druckbehälter in einer vergrößerten Ausschnittdarstellung des Ventilanschlussstücks und Auswölbung des Innenbehälters;
- Fig.3:: schematische Darstellung des erfindungsgemäßen Dichtungskonzepts mit Außenstück, Auswölbung des Innenbehälters du Dichtkonus und den ausgebildeten Dichtungswülsten;
- Fig.4:: eine Ausführungsform des erfindungsgemäßen Verfahrens zur Herstellung des erfindungsgemäßen Druckbehälters.

### Detaillierte Beschreibung der Ausführungsbeispiele

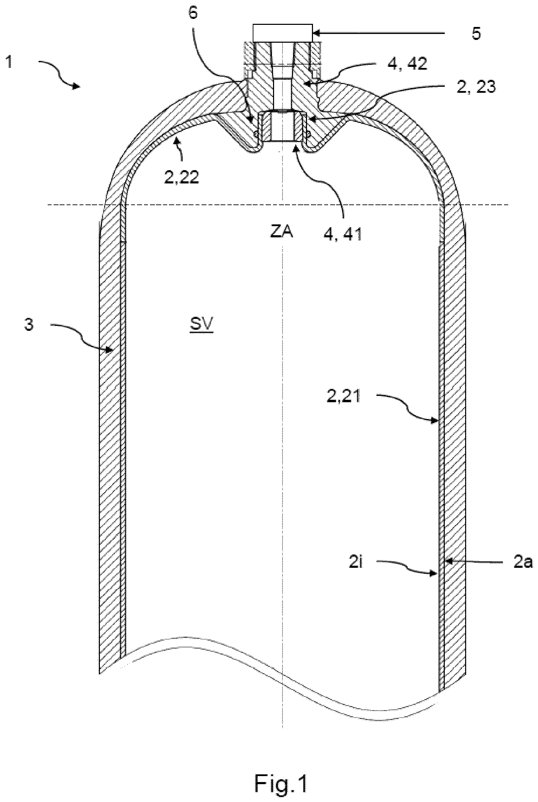

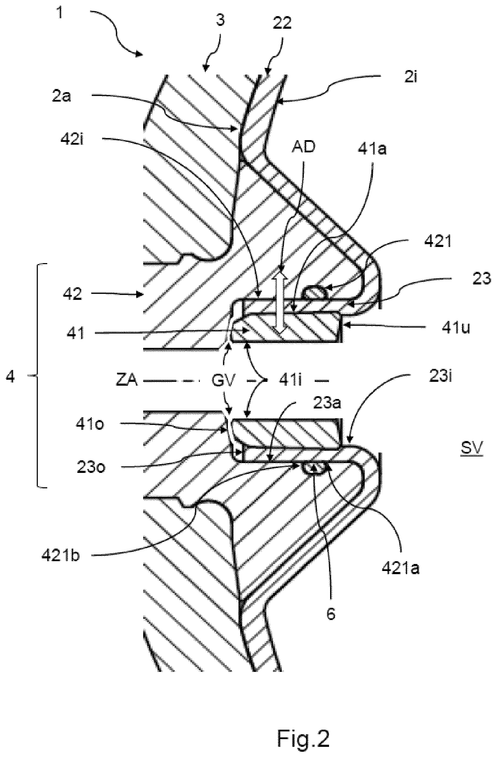

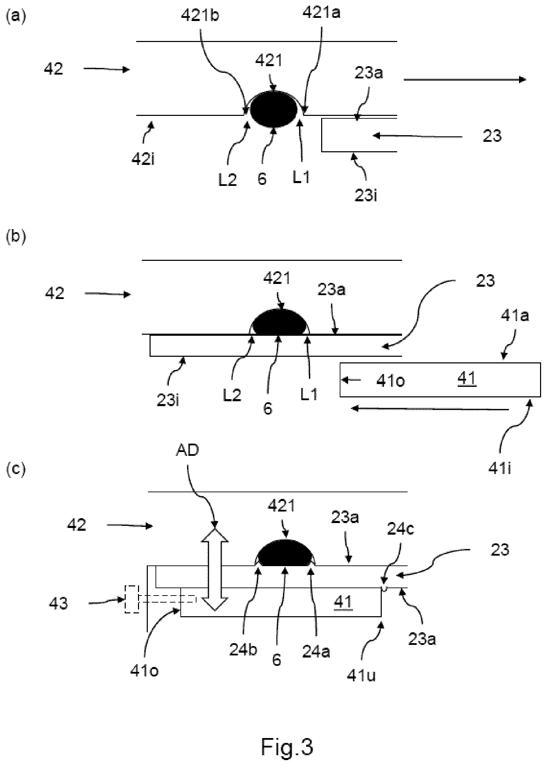

Fig.1 zeigt eine Ausführungsform des erfindungsgemäßen Druckbehälters 1 im seitlichen Schnitt umfassend einen Innenbehälter 2 mit einer Innen- und Außenseite 2i, 2a aus einem unter Druck zumindest teilweise plastisch verformbaren Innenbehältermaterial mit einem zylindrischen Mittelteil 21 mit einer Zylinderachse ZA und mit zwei das zylindrische Mittelteil 21 abschließenden Polkappen 22 zur Bereitstellung eines Speichervolumens SV im Druckbehälter. Aus Übersichtsgründen ist der Druckbehälter 1 nur zur Hälfte gezeigt. Die hier nicht gezeigte gegenüberliegende Polkappe 22 zum Verschließen des Mittelteils 21 auf der anderen Seite kann keine Auswölbung 23, sondern stattdessen eine durchgehende geschlossene Kontur, umfassen oder entspricht der gezeigten Polkappe 22 mit einer eigenen verschließbaren Öffnung oder einem entsprechenden Ventilanschlussstück. Der Innenbehälter 2 kann natürlich auch ohne das hier gezeigte zylindrische Mittelteil 21 aus nur den beiden Polkappen 22 gefertigt sein. Für einen solchen Innenbehälter gelten analog alle Ausführungen der Erfindung wie in den Figuren 1 - 4 gezeigt gleichermaßen. Das Innenbehältermaterial kann jedes plastisch verformbare Material sein. Vorzugsweise ist das Innenbehältermaterial zumindest für die Auswölbung 23 ein PA-, PE- oder ein Mehrschichtmaterial aus diesen Materialien. Auf den Innenbehälter 2 ist zu dessen Verstärkung eine Außenschicht 3 aufgebracht. Damit der Druckbehälter mit Füllgas befüllt und dieses zu einem späteren Zeitpunkt aus dem Speichervolumen SV wieder abgelassen werden kann, ist ein Ventilanschlussstück 4 mit Dichtkonus 41 und Außenstück 42 mit einem Dichtungsring 6 auf der Polkappen 22 zur Aufnahme eines Ventils 5 und zur Abdichtung des Speichervolumens gegenüber dem Innenbehälter 2 angeordnet. Dazu ragt der Innenbehälter 2 zylinderförmig als Auswölbung 23 aus der Außenseite 2a der Polkappe 22 hervor, die eine zum Speichervolumen SV hin innen offene Verbindung bereitstellt. Diese Verbindung wird dann durch das Ventil 5 geschlossen und auf Bedarf wieder geöffnet. Das Außenstück 42 des Ventilanschlussstücks 4 kann dabei Verbindungsmittel zur druckstabilen Aufnahme des Ventils 5 umfasst. Für Details zum Außenstück 42, Dichtkonus 41, Auswölbung 23 und den erzeugten Dichtungswülsten 24a, 24b, 24c wird auf die Figuren 2 und 3 verwiesen.

Fig.2 zeigt den in Fig. 1 dargestellten Druckbehälter 1 in einer vergrößerten Ausschnittdarstellung des Ventilanschlussstücks 4 mit Dichtkonus 41, Außenstück 42 und Auswölbung 23 der Polkappe 22 des Innenbehälters 2 entlang der Zylinderachse ZA. Der Dichtkonus 41 ist an der Innenseite 23i der Auswölbung 23 und das Außenstück 42 an der Außenseite 23a der Auswölbung 23 zur Erzeugung eines Abdichtdrucks AD zwischen Dichtkonus 41, Auswölbung 23 und Außenstück 42 positioniert. Dabei weist das Außenstück 42 auf seiner zur Auswölbung 23 hin ausgerichteten Seite 42i eine Nut 421 mit einer dem Speichervolumen SV zugewandten ersten Kante 421a und einer in entgegengesetzter Richtung vorhandenen zweiten Kante 421b auf, um den unter dem Abdichtdruck AD abdichtenden Dichtungsrings 6 aufzunehmen und in Position zu halten, wenn das Außenstück 42 auf die Auswölbung 23 geschoben wird. Die Nut 421 und der Dichtungsring 6, beispielsweise ein O-Ring, so dabei dimensioniert, dass Lücken L1, L2 zwischen Dichtungsring 6 und erster sowie zweiter Kante 421a, 421b existieren, in die das plastisch verformbare Innenbehältermaterial eindringen kann, um erfindungsgemäß die ersten und zweiten Dichtungswülste 24a, 24b (ggf. zusätzlich Dichtungswulst 24c entlang der Unterseite 41u des Dichtkonus 41) auszubilden, die in diese Lücken L1 und L2 hineinragen. Des Weiteren ist der Dichtkonus oder das Außenstück 42 so geformt ist, dass zwischen dem Speichervolumen SV und der Oberseite 23o der Auswölbung 23 (die Seite, die in Richtung der Außenseite des Druckbehälters ausgerichtet ist) sowie der Oberseite 41o des Dichtkonus 41 eine offene Gasverbindung GV zum Speichervolumen SV besteht. Da der Dichtkonus 41 eine der Auswölbung zugewandte Außenseite 41a und eine entgegengesetzte Innenseite 41i umfasst, wobei die Fläche der auf der Auswölbung 23 aufliegende Außenseite 41a des Dichtkonus 42 kleiner ist als dessen Innenseite 41i, bewirkt der Innendruck im Speichervolumen SV des Druckbehälters 1, dass der Dichtkonus 41 zusätzlich aufgrund der Flächenverhältnisse in Richtung der Auswölbung 23 und damit gegen die Innenseite 42i des Außenstücks 42 gepresst wird. Die Nut 421 besitzt dabei eine Kontur, die an eine Form des Dichtungsrings 6 im unbelasteten Zustand angepasst ist. Hierbei ist die Außenschicht 3 auf der Außenseite 2a des Innenbehälters 2 aufgebracht, während dessen Innenseite 2i das Speichervolumen SV definiert.

Fig.3 zeigt eine schematische Darstellung des erfindungsgemäßen Dichtungskonzepts mit Außenstück 42, Auswölbung 23 der Polkappe 22 des Innenbehälters 2, Dichtkonus 41 und den ausgebildeten Dichtungswülsten 24a, 24b, 24c. In Fig.3a wird das Außenstück 42 mit seiner Innenseite 42i auf die Außenseite 23a der Auswölbung 23 geschoben. Der Dichtungsring 6, hier als O-Ring ausgeführt, sitzt in der Nut 421, wobei zwischen den Kanten 421a und 421b jeweils Lücken L1 und L2 existieren, in denen kein Material des O-Rings 6 ist. Zusätzlich besitzt die Nut 421 eine Kontur, die an eine Form des O-Rings 6 im unbelasteten Zustand angepasst ist, damit sich dieser beim Aufschieben des Außenstücks 42 nicht verdrillt. Nach Aufschieben des Anschlussstücks 42 auf die Auswölbung 23 wird der O-Ring 6 komprimiert, sodass sich die Lücken L1 und L2 zwar verkleinern, aber durch eine entsprechende Dimensionierung der Nut 421 und des O-Rings 6 weiter vorhanden sind. Zu diesem Zeitpunkt bilden sich noch keine Dichtungswülste aus, da der dafür notwendige Abdichtdruck AD erst nach Positionierung des Dichtkonus 41 von Innen auf die Auswölbung 23 erzeugt wird. Wie in Fig.3b gezeigt ist, wird nun der Dichtkonus 41 mit seiner Außenseite 41a von Innen auf die Innenseite 23i des Auswölbung 23 geschoben. Diese beiden Schritte (Aufschieben des Außenstücks 42 und Einschieben des Dichtkonus 41) können im Rahmen der vorliegenden Erfindung auch in umgekehrter Reihenfolge ausgeführt werden, wobei das in Fig.3c gezeigte Resultat das Gleiche wäre. Nachdem der Dichtkonus 41 an seiner vorgesehenen Stelle auf der Innenseite 23i des Auswölbung 23 positioniert ist, wirkt der Abdichtdruck AD zwischen Dichtkonus 14, Auswölbung 23 und Außenstück 42. Durch den Abdichtdruck AD bei den geeignet dimensionierten Nut 241 und O-Ring 6 bilden sich aufgrund der plastischen Verformbarkeit des Innenbehältermaterials nun in beiden vorhandenen Lücken L1, L2 zwischen O-Ring 6 und erster sowie zweiter Kante 421a, 421b in diese Lücken L1, L2 hineinragende erste und zweite Dichtungswülste 24a, 24b aus, die zusammen mit der konventionellen Dichtung (O-Ring-zu Auswölbung) eine freifach-redundante Abdichtung des Speichervolumens SV gegen die Außenseite des Druckbehälters 1 darstellen. Außerdem ist der Dichtkonus 41 hier so dimensioniert, dass das Innenbehältermaterial aufgrund seiner plastischen Verformbarkeit zusätzlich einen dritten Wulst 24c um den Dichtkonus 41 auf seiner zum Speichervolumen SV hin gerichteten Unterseite 41u auszubilden. Mit diesem dritten Wulst 24c wird die freifach-redundante Abdichtung insofern unterstützt, als dass der Dichtkonus durch den Dritten Wulst 24c in seiner Position gehalten wird und somit nicht in den Innenbehälter hineinrutschen oder gar hineinfallen kann. Zusätzlich ist in Fig.3c eine Ausführungsform angedeutet (gestrichelt gezeigt), wo das Ventilanschlussstück 4 ein zusätzliches Sicherungselement 43 umfasst, das den Dichtkonus 41 und das Außenstück 42 miteinander verbindet. Dieses Sicherungselement 43 ist als Schraube im Außenstück 42 gelagert, deren Gewinde mit einem entsprechenden Loch in der Oberseite 41o des Dichtkonus 41 eine feste Verbindung herstellt.

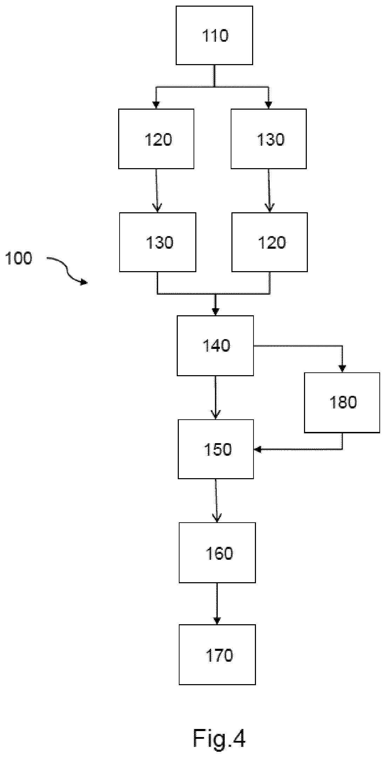

Fig.4 zeigt eine Ausführungsform des erfindungsgemäßen Verfahrens 100 zur Herstellung des erfindungsgemäßen Druckbehälters 1 umfassend einen Innenbehälter 2 mit einer Innen- und Außenseite 2i, 2a aus einem unter Druck zumindest teilweise plastisch verformbaren Innenbehältermaterial mit einer Zylinderachse ZA und zumindest mit zwei den Innenbehälter 2 mitformenden Polkappen 22, von denen eine der Polkappen zur Aufnahme eines Ventils 5 ausgestaltet ist, einer auf den Innenbehälter 2 positionierten Außenschicht 3, ein Ventilanschlussstück 4 mit Dichtkonus 41 und Außenstück 42. Das Verfahren 100 umfasst dabei die nachfolgenden Schritte des Bereitstellens 110 der zur Aufnahme eines Ventils 5 ausgestalteten Polkappe 22, die zum Anschließen des Ventilanschlussstücks 4 eine zylinderförmig aus der Außenseite 2a hervorragende zum Speichervolumen SV hin innen offene Auswölbung 23 umfasst; des Aufsetzens 120 des Außenstücks 42 auf die Außenseite 23a der Aussparung 23, wobei das Außenstück 42 auf seiner zur Auswölbung 23 ausgerichteten Seite 42i eine geeignet geformte Nut 421 mit einer dem späteren Speichervolumen SV zugewandten ersten Kante 421a und einer in entgegengesetzter Richtung vorhandenen zweiten Kante 421b und einen in der Nut 421 positionierten und unter einem Abdichtdruck AD abdichtenden Dichtungsring 6 aufweist; des Einsetzens 130 des Dichtkonus 41 von der Innenseite 2i der Polkappe 22 her in die Innenseite 23i der Aussparung 23 hinein zur Erzeugung eines Abdichtdrucks AD zwischen Dichtkonus 41, Auswölbung 23 und Außenstück 42, wobei die Schritte 120 und 130 auch in umgekehrter Reihenfolge ausgeführt werden können; des Ausbildens 140 zumindest von ersten und zweiten Dichtungswülsten 24a, 24b, die unter dem Abdichtdruck AD bei entsprechend dimensionierter Nut 421 und Dichtungsring 6 aufgrund der plastischen Verformbarkeit des Innenbehältermaterials in beide Lücken L1, L2 zwischen Dichtungsring 6 und erster sowie zweiter Kante 421a, 421b zur Abdichtung des Speichervolumens gegenüber dem späteren Innenbehälter 2 hineinragen; der Fertigstellung 150 des Innenbehälters 2 durch geeignetes Verbinden zumindest der beiden Polkappen 22 zur Bereitstellung des Speichervolumens SV für den Druckbehälter 1; des Herstellens 160 der Außenschicht 3 auf den Innenbehälter 2 zur Verstärkung des Druckbehälters 1; und des Aufsetzens 170 des Ventils 5 in das Ventilanschlussstück 4 zum Verschluss des Druckbehälters 1. Hierbei kann das Verfahren 100 zusätzlich auch noch den weiteren Schritt des Ausbildens 180 einer dritten Wulst 24c um den Dichtkonus 41 auf seiner zum Speichervolumen SV hin gerichteten Unterseite 41u aufgrund der plastischen Verformbarkeit des Innenbehältermaterials umfassen. Die Außenschicht 3 kann dabei aus Faserverbundmaterial bestehen und beim Schritt des Herstellens 160 auf den Innenbehälter 2 gewickelt werden. Das Aufsetzen des Ventils 5 kann mittels eines Verschraubens durchgeführt werden. Die Polkappen 22 und gegebenenfalls ein dazwischen angeordnetes Mittelteil 21 können zur Fertigstellung des Innenbehälters 2 miteinander verschweißt werden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### LISTE DER BEZUGSZEICHEN

- 1: erfindungsgemäßer Druckbehälter
- 2: Innenbehälter
- 2i: Innenseite des Innenbehälters
- 2a: Außenseite des Innenbehälters
- 21: Mittelteil des Innenbehälters
- 22: Polkappen des Innenbehälters
- 23: Auswölbung des Innenbehälters
- 23i: Innenseite der Auswölbung
- 23a: Außenseite der Auswölbung
- 23o: Oberseite der Auswölbung
- 24a: erste Dichtungswulst
- 24b: zweite Dichtungswulst
- 24c: dritte Wulst
- 3: Außenschicht
- 4: Ventilanschlussstück
- 41: Dichtkonus
- 41a: Außenseite Dichtkonus
- 41i: Innenseite Dichtkonus
- 41o: Oberseite Dichtkonus
- 41u: Unterseite Dichtkonus
- 42: Außenstück
- 42i: zur Auswölbung ausgerichteten Seite (Innenseite des Außenstücks)
- 421: Nut
- 421a: erste Kante
- 421b: zweite Kante
- 43: Sicherungselement
- 5: Ventil
- 6: Dichtungsring

- 100: Ein Verfahren zur Herstellung eines erfindungsgemäßen Druckbehälters
- 110: Bereitstellen der zur Aufnahme des Ventils ausgestalteten Polkappe
- 120: Aufsetzen des Außenstücks auf die Polkappe
- 130: Einsetzen des Dichtkonus von innen in die Polkappe
- 140: Ausbilden erster und zweiter Dichtungswülste unter dem Abdichtdruck
- 150: Fertigstellung des Innenbehälters
- 160: Herstellen der Außenschicht auf den Innenbehälter
- 170: Aufsetzen des Ventils in das Ventilanschlussstück
- 180: Ausbilden einer dritten Wulst

- AD: Abdichtdruck
- GV: Gasverbindung
- L1, L2: Lücken zwischen erster beziehungsweise zweiter Kante der Nut und dem Dichtungsring
- SV: Speichervolumen
- ZA: Zylinderachse

## Patentansprüche

1. Ein Druckbehälter (1) umfassend einen Innenbehälter (2) mit einer Innen und Außenseite (2i, 2a) aus einem unter Druck zumindest teilweise plastisch verformbaren Innenbehältermaterial mit einer Zylinderachse (ZA) und zumindest mit zwei den Innenbehälter (2) mitformenden Polkappen (22) zur Bereitstellung eines Speichervolumens (SV) im Druckbehälter, eine auf den Innenbehälter (2) zu dessen Verstärkung aufgebrachten Außenschicht (3), und ein Ventilanschlussstück (4) mit Dichtkonus (41) und Außenstück (42) angeordnet auf einer der Polkappen (22) zur Aufnahme eines Ventils (5) und zur Abdichtung des Speichervolumens gegenüber dem Innenbehälter (2), wobei der Innenbehälter (2) zum Anschließen des Ventilanschlussstücks (4) eine zylinderförmig aus der Außenseite (2a) der Polkappe (22) hervorragende zum Speichervolumen (SV) hin innen offene Auswölbung (23) umfasst, wobei der Dichtkonus (41) an einer Innenseite (23i) der Auswölbung (23) und das Außenstück (42) zur Erzeugung eines Abdichtdrucks (AD) zwischen Dichtkonus (41), Auswölbung (23) und Außenstück (42) auf einer Außenseite (23a) der Auswölbung (23) positioniert ist, wobei das Außenstück (42) auf seiner zur Auswölbung (23) ausgerichteten Seite (42i) eine geeignet geformte Nut (421) mit einer dem Speichervolumen (SV) zugewandten ersten Kante (421a) und einer in entgegengesetzter Richtung vorhandenen zweiten Kante (421 b) zur Aufnahme eines unter dem Abdichtdruck (AD) abdichtenden Dichtungsrings (6) aufweist,
**dadurch gekennzeichnet,**
**dass** die Nut (421) und der Dichtungsring (6) so dimensioniert sind und das Innenbehältermaterial dazu vorgesehen ist, unter dem Abdichtdruck (AD) aufgrund seiner plastischen Verformbarkeit zumindest in beiden Lücken (L 1, L2) zwischen Dichtungsring (6) und erster sowie zweiter Kante (421 a, 421 b) hineinragende erste und zweite Dichtungswülste (24a, 24b) auszubilden.

2. Der Druckbehälter (1) nach Anspruch 1,
**dadurch gekennzeichnet,**
**dass** der Dichtkonus (41) so dimensioniert ist, dass das Innenbehältermaterial aufgrund seiner plastischen Verformbarkeit einen dritten Wulst (24c) um den Dichtkonus (41) auf seiner zum Speichervolumen (SV) hin gerichteten Unterseite (41 u) auszubilden.

3. Der Druckbehälter (1) nach einem der voranstehenden Ansprüche,
**dadurch gekennzeichnet,**
**dass** der Dichtkonus oder das Außenstück (42) so geformt ist, dass zwischen dem Speichervolumen (SV) und einer Oberseite (230) der Auswölbung (23) eine offene Gasverbindung (GV) zum Speichervolumen (SV) besteht.

4. Der Druckbehälter (1) nach Anspruch 3,
**dadurch gekennzeichnet,**
**dass** der Dichtkonus (41) eine der Auswölbung zugewandte Außenseite (41a) und eine entgegengesetzte Innenseite (41i) umfasst, wobei die Fläche der auf der Auswölbung aufliegenden Außenseite (41a) des Dichtkonus (42) kleiner ist als dessen Innenseite (41 i).

5. Der Druckbehälter (1) nach einem der voranstehenden Ansprüche,
**dadurch gekennzeichnet,**
**dass** der Dichtungsring (6) in die Nut (421) eingesetzt ist und die Nut (421) eine Kontur besitzt, die an eine Form des Dichtungsrings (6) im unbelasteten Zustand angepasst ist.

6. Der Druckbehälter (1) nach Anspruch 5,
**dadurch gekennzeichnet,**
**dass** der Dichtungsring (6) ein O-Ring ist.

7. Der Druckbehälter (1) nach einem der voranstehenden Ansprüche,
**dadurch gekennzeichnet,**
**dass** das Innenbehältermaterial zumindest für die Auswölbung ein PA-, PE- oder ein Mehrschichtmaterial aus diesem Materialien ist.

8. Der Druckbehälter (1) nach einem der voranstehenden Ansprüche,
**dadurch gekennzeichnet,**
**dass** das Ventilanschlussstück (4) ein zusätzliches Sicherungselement (43) umfasst, das den Dichtkonus und das Außenstück miteinander verbindet.

9. Der Druckbehälter (1) nach Anspruch 8,
**dadurch gekennzeichnet,**
**dass** das Sicherungselement (43) im Außenstück (42) gelagert ist und zumindest auf seiner dem Dichtkonus zugewandten Seite ein Gewinde umfasst, das zum Eingriff in die Oberseite (41o) des Dichtkonus vorgesehen ist.

10. Der Druckbehälter (1) nach einem der voranstehenden Ansprüche,
**dadurch gekennzeichnet,**
**dass** das Außenstück (42) des Ventilanschlussstücks (4) Verbindungsmittel zur druckstabilen Aufnahme des Ventils (5) umfasst.

11. Ein Verfahren (100) zur Herstellung eines Druckbehälters (1) nach Anspruch 1 umfassend einen Innenbehälter (2) mit einer Innen- und Außenseite (2i, 2a) aus einem unter Druck zumindest teilweise plastisch verformbaren Innenbehältermaterial mit einer Zylinderachse (ZA) und zumindest mit zwei den Innenbehälter (2) mitformenden Polkappen (22), von denen eine der Polkappen zur Aufnahme eines Ventils (5) ausgestaltet ist, einer auf den Innenbehälter (2) positionierten Außenschicht (3) und ein Ventilanschlussstück (4) mit Dichtkonus (41) und Außenstück (42), umfassend die nachfolgenden Schritte:
Bereitstellen (110) der zur Aufnahme eines Ventils (5) ausgestalteten Polkappe (22), die zum Anschließen des Ventilanschlussstücks (4) eine zylinderförmig aus der Außenseite (2a) hervorragende zum späteren Speichervolumen (SV) hin innen offene Auswölbung (23) umfasst;
Aufsetzen (120) des Außenstücks (42) auf die Außenseite (23a) der Aussparung (23), wobei das Außenstück (42) auf seiner zur Auswölbung (23) ausgerichteten Seite (42i) eine geeignet geformte Nut (421) mit einer dem späteren Speichervolumen (SV) zugewandten ersten Kante (421 a) und einer in entgegengesetzter Richtung vorhandenen zweiten Kante (421 b) und einen in der Nut (421) positionierten und unter einem Abdichtdruck (AD) abdichtenden Dichtungsring (6) aufweist;
Einsetzen (130) des Dichtkonus (41) von der Innenseite (2i) der Polkappe (22) her in die Innenseite (23i) der Aussparung (23) hinein zur Erzeugung eines Abdichtdrucks (AD) zwischen Dichtkonus (41), Auswölbung (23) und Außenstück (42);
Ausbilden (140) zumindest von ersten und zweiten Dichtungswülsten (24a, 24b), die unter dem Abdichtdruck (AD) bei entsprechend dimensionierter Nut (421) und Dichtungsring (6) aufgrund der plastischen Verformbarkeit des Innenbehältermaterials in beide Lücken (L 1, L2) zwischen Dichtungsring (6) und erster sowie zweiter Kante (421 a, 421 b) zur Abdichtung des späteren Speichervolumens gegenüber dem späteren Innenbehälter (2) hineinragen;
Fertigstellung (150) des Innenbehälters (2) durch geeignetes Verbinden zumindest der beiden Polkappen (22) zur Bereitstellung des Speichervolumens (SV) für den Druckbehälter (1);
Herstellen (160) der Außenschicht (3) auf den Innenbehälter (2) zur Verstärkung des Druckbehälters (1); und
Aufsetzen (170) des Ventils (5) in das Ventilanschlussstück (4) zum Verschluss des Druckbehälters (1).

12. Das Verfahren (100) nach Anspruch 11, umfassend den weiteren Schritt des Ausbildens (180) einer dritten Wulst (24c) um den Dichtkonus (41) auf seiner zum Speichervolumen (SV) hin gerichteten Unterseite (41u) aufgrund der plastischen Verformbarkeit des Innenbehältermaterials.

13. Das Verfahren (100) nach Anspruch 11 oder 12, wobei die Außenschicht (3) aus Faserverbundmaterial besteht und beim Schritt des Herstellens (160) auf den Innenbehälter (2) gewickelt wird.

14. Das Verfahren (100) nach einem der Ansprüche 11 bis 13, wobei das Aufsetzen des Ventils (5) mittels eines Verschraubens durchgeführt wird.

15. Das Verfahren (100) nach einem der Ansprüche 11 bis 14, wobei zumindest die Polkappen (22) zur Fertigstellung des Innenbehälters (2) miteinander verschweißt werden.

## Claims

1. Pressure vessel (1) comprising an inner vessel (2) that has an inner and an outer face (2i, 2a) and is made of an inner-vessel material that is at least partially plastically deformable under pressure and has a cylinder axis (ZA) and at least two pole caps (22) that together form the inner vessel (2), for providing a storage volume (SV) in the pressure vessel, comprising an outer layer (3) applied to the inner vessel (2) for the reinforcement thereof, and comprising a valve-connection piece (4) having a sealing cone (41) and outer piece (42) arranged on one of the pole caps (22) for receiving a valve (5) and for sealing the storage volume from the inner vessel (2), the inner vessel (2) comprising, for connecting the valve-connection piece (4), a protrusion (23) that is inwardly open towards the storage volume (SV) and projects cylindrically from the outer face (2a) of the pole cap (22), the sealing cone (41) being positioned on an inner face (23i) of the protrusion (23) and the outer piece (42) for generating a sealing pressure (AD) between the sealing cone (41), the protrusion (23) and the outer piece (42) on an outer face (23a) of the protrusion (23), the outer piece (42) comprising, on the face (42i) thereof oriented towards the protrusion (23), a suitably shaped groove (421) having a first edge (421a) facing the storage volume (SV) and a second edge (421b) provided in the opposite direction for receiving a sealing ring (6) that seals under the sealing pressure (AD),
**characterised in that**
the groove (421) and the sealing ring (6) are dimensioned such that and the inner-vessel material is provided such that, under the sealing pressure (AD) and due to the plastic deformability thereof, first and second sealing beads (24a, 24b) that project at least into two gaps (L1, L2) between the sealing ring (6) and the first and second edge (421a, 421b) are formed.

2. Pressure vessel (1) according to claim 1,
**characterised in that**
the sealing cone (41) is dimensioned such that the inner-vessel material forms, due to its plastic deformability, a third bead (24c) around the sealing cone (41) on its lower face (41u) directed towards the storage volume (SV).

3. Pressure vessel (1) according to any of the preceding claims,
**characterised in that**
the sealing cone or the outer piece (42) is formed such that there is an open gas connection (GV) towards the storage volume (SV) between the storage volume (SV) and an upper face (230) of the protrusion (23).

4. Pressure vessel (1) according to claim 3,
**characterised in that**
the sealing cone (41) comprises an outer face (41a) that faces the protrusion and an opposite inner face (41i), the surface area of the outer face (41) of the sealing cone (42) abutting the protrusion is smaller than the inner face (41i) thereof.

5. Pressure vessel (1) according to any of the preceding claims,
**characterised in that**
the sealing ring (6) is inserted into the groove (421) and the groove (421) has a contour which is adapted to a shape of the sealing ring (6) in the unloaded state.

6. Pressure vessel (1) according to claim 5,
**characterised in that**
the sealing ring (6) is an O ring.

7. Pressure vessel (1) according to any of the preceding claims,
**characterised in that**
the inner-vessel material, at least for the protrusion, is a PA material, a PE material or a multi-layered material made of these materials.

8. Pressure vessel (1) according to any of the preceding claims,
**characterised in that**
the valve-connection piece (4) comprises an additional securing element (43) which interconnects the sealing cone (41) and the outer piece (42).

9. Pressure vessel (1) according to claim 8,
**characterised in that**
the securing element (43) is mounted in the outer piece (42) and comprises a thread, which is provided for engagement in the upper face (41o) of the sealing cone (41), at least on its side facing the sealing cone (41).

10. Pressure vessel (1) according to any of the preceding claims,
**characterised in that**
the outer piece (42) of the valve-connection piece (4) comprises connection means for receiving the valve (5) in a pressure-stable manner.

11. Method (100) for producing a pressure vessel (1) according to claim 1, comprising an inner vessel (2) that has an inner and an outer face (2i, 2a) and is made of an inner-vessel material that is at least partially plastically deformable under pressure and has a cylinder axis (ZA) and at least two pole caps (22) that together form the inner vessel (2), of which one of the pole caps is designed for receiving a valve (5), an outer layer (3) positioned on the inner vessel (2) and a valve-connection piece (4) having a sealing cone (41) and outer piece (42), comprising the following steps:
providing (110) the pole cap (22) designed for receiving a valve (5), which cap comprises, for connecting the valve-connection piece (4), a protrusion (23) that is inwardly open towards the subsequent storage volume (SV) and projects cylindrically from the outer face (2a);
fitting (120) the outer piece (42) onto the outer face (23a) of the recess (23), the outer piece (42) comprising, on its face (42i) oriented towards the protrusion (23), a suitably shaped groove (421) having a first edge (421a) facing the subsequent storage volume (SV) and a second edge (421b) provided in the opposite direction, and a sealing ring (6) that is positioned in the groove (421) and seals under a sealing pressure (AD);
inserting (130) the sealing cone (41) from the inner face (2i) of the pole cap (22) into the inner face (23i) of the recess (23) for generating a sealing pressure (AD) between the sealing cone (41), the protrusion (23) and the outer piece (42);
forming (140) at least first and second sealing beads (24a, 24b), which, under the sealing pressure (AD) and with an accordingly dimensioned groove (421) and sealing ring (6), project into two gaps (L1, L2) between the sealing ring (6) and the first and second edge (421a, 421b) due to the plastic deformability thereof in order to seal the subsequent storage volume (SV) from the subsequent inner vessel (2);
completing (150) the inner vessel (2) by suitably connecting at least the two pole caps (22) in order to provide the storage volume (SV) for the pressure vessel (1);
producing (160) the outer layer (3) on the inner vessel (2) in order to reinforce the pressure vessel (1); and
fitting (170) the valve (5) into the valve-connection piece (4) in order to close the pressure vessel (1).

12. Method (100) according to claim 11, comprising the further step of forming (180) a third bead (24c) around the sealing cone (41) on its lower face (41u) directed towards the storage volume (SV) due to the plastic deformability of the inner-vessel material.

13. Method (100) according to claim 11 or 12, wherein the outer layer (3) consists of fibre composite material and is wound onto the inner vessel (2) in the producing step (160).

14. Method (100) according to any of claims 11 to 13, wherein the valve (5) is fitted by being screwed on.

15. Method (100) according to any of claims 11 to 14, wherein at least the pole caps (22) are welded together in order to complete the inner vessel (2).

## Revendications

1. Contenant sous pression (1) comprenant un contenant intérieur (2) avec une face intérieure et une face extérieure (2i, 2a) en un matériau de contenant intérieur au moins en partie plastiquement déformable sous l'effet d'une pression avec un axe de cylindre (ZA) et au moins avec deux calottes polaires (22) entraînant le façonnage du contenant intérieur (2) pour fournir un volume de stockage (SV) dans le contenant sous pression, une couche extérieure (3) appliquée sur le contenant intérieur (2) aux fins de son renforcement, et une pièce de raccordement de soupape (4) avec un cône étanche (41) et une pièce extérieure (42) disposés sur une des calottes polaires (22) servant à loger une soupape (5) et servant à étanchéifier le volume de stockage par rapport au contenant intérieur (2), dans lequel le contenant intérieur (2) comprend, aux fins du raccordement de la pièce de raccordement de soupape (4), un bombement (23) ouvert côté intérieur en direction du volume de stockage (SV) faisant saillie en forme de cylindre hors de la face extérieure (2a) de la calotte polaire (22), dans lequel le cône étanche (41) est positionné au niveau d'une face intérieure (23i) du bombement (23) et la pièce extérieure (42) est positionnée, pour générer une pression d'étanchéification (AD) entre le cône étanche (41), le bombement (23) et la pièce extérieure (42), sur une face extérieure (23a) du bombement (23), dans lequel la pièce extérieure (42) présente, sur sa face (41i) orientée vers le bombement (23), une rainure (421) façonnée de forme adaptée avec une première arête (421a) tournée vers le volume de stockage (SV) et une deuxième arête (421b) présente dans une direction opposée, servant à loger une bague d'étanchéité (6) ayant une action d'étanchéification sous l'effet de la pression d'étanchéification (AD),
**caractérisé en ce**
**que** la rainure (421) et la bague d'étanchéité (6) sont dimensionnées de telle sorte et le matériau de contenant intérieur est prévu pour réaliser sous l'effet de la pression d'étanchéification (AD) en raison de sa déformabilité plastique , des premiers et des deuxièmes bourrelets d'étanchéité (24a, 24b) faisant saillie au moins dans deux interstices (L1, L2) entre la bague d'étanchéité (6) et une première et une deuxième arête (421a, 421b).

2. Contenant sous pression (1) selon la revendication 1,
**caractérisé en ce**
**que** le cône étanche (41) est dimensionné de telle sorte que le matériau de contenant intérieur comprend en raison de sa déformabilité plastique un troisième bourrelet (24c) pour réaliser le cône étanche (41) sur sa face inférieure (41u) dirigée en direction du volume de stockage (SV).

3. Contenant sous pression (1) selon l'une quelconque des revendications précédentes,
**caractérisé en ce**
**que** le cône étanche ou la pièce extérieure (42) sont formés de telle sorte qu'il existe une liaison de gaz (GV) ouverte avec le volume de stockage (SV) entre le volume de stockage (SV) et une face supérieure (230) du bombement (23).

4. Contenant sous pression (1) selon la revendication 3,
**caractérisé en ce**
**que** le cône étanche (41) présente une face extérieure (41a) tournée vers le bombement et une face intérieure (41i) opposée, dans lequel la surface de la face extérieure (41a), reposant sur le bombement, du cône étanche (42) est inférieure à celle de sa face intérieure (41i).

5. Contenant sous pression (1) selon l'une quelconque des revendications précédentes,
**caractérisé en ce**
**que** la bague d'étanchéité (6) est insérée dans la rainure (421) et la rainure (421) possède un contour, qui est adapté à une forme de la bague d'étanchéité (6) dans l'état non soumis à une charge.

6. Contenant sous pression (1) selon la revendication 5,
**caractérisé en ce**
**que** la bague d'étanchéité (6) est un joint torique.

7. Contenant sous pression (1) selon l'une quelconque des revendications précédentes
**caractérisé en ce**
**que** le matériau de contenant intérieur au moins pour le bombement est un matériau à base de PA, de PE ou un matériau multicouche composé desdits matériaux.

8. Contenant sous pression (1) selon l'une quelconque des revendications précédentes,
**caractérisé en ce**
**que** la pièce de raccordement de soupape (4) comprend un élément de blocage (43) supplémentaire, qui relie le cône étanche (41) et la pièce extérieure (42) l'un à l'autre.

9. Contenant sous pression (1) selon la revendication 8,
**caractérisé en ce**
**que** l'élément de blocage (43) est monté dans la pièce extérieure (42) et comprend, au moins sur sa face tournée vers le cône étanche (41), un filetage, qui est prévu pour venir en prise avec la face supérieure (41o) du cône étanche (41).

10. Contenant sous pression (1) selon l'une quelconque des revendications précédentes,
**caractérisé en ce**
**que** la pièce extérieure (42) de la pièce de raccordement de soupape (4) comprend des moyens de liaison servant à loger avec une stabilité de pression la soupape (5).

11. Procédé (100) servant à fabriquer un contenant sous pression (1) selon la revendication 1 comprenant un contenant intérieur (2) avec une face intérieure et une face extérieure (2i, 2a) en un matériau de contenant intérieur au moins en partie plastiquement déformable sous l'effet d'une pression avec un axe de cylindre (ZA) et au moins avec deux calottes polaires (22) entraînant le façonnage du contenant intérieur (2), dont une des calottes polaires est configurée pour loger une soupape (5), une couche extérieure (3) positionnée sur le contenant intérieur (2), et une pièce de raccordement de soupape (4) avec un cône étanche (41) et une pièce extérieure (42), comprenant les étapes qui suivent :
de fourniture (100) de la calotte polaire (22) configurée pour loger une soupape (5), qui comprend, aux fins du raccordement de la pièce de raccordement de soupape (4), un bombement (23) ouvert côte intérieur en direction du volume de stockage (SV) ultérieur faisant saillie hors de la face extérieure (2a) de manière à présenter une forme de cylindre ;
de placement (120) de la pièce extérieure (42) sur la face extérieure (23a) de l'évidement (23), dans lequel la pièce extérieure (42) présente, sur sa face (42i) orientée vers le bombement (23), une rainure (421) façonnée de manière adaptée avec une première arête (421a) tournée vers le volume de stockage (SV) ultérieur et une deuxième arête (421b) présente dans une direction opposée et une bague d'étanchéité (6) positionnée dans la rainure (421) et ayant une action d'étanchéification sous l'effet d'une pression d'étanchéification (AD) ;
d'insertion (130) du cône étanche (41) depuis la face intérieure (2i) de la calotte polaire (22) à l'intérieur de la face intérieure (23i) de l'évidement (23) pour générer une pression d'étanchéification (AD) entre le cône étanche (41), le bombement (23) et la pièce extérieure (42) ;
de réalisation (140) d'au moins de premiers et deuxièmes bourrelets d'étanchéité (24a, 24b), qui dépassent, sous l'effet de la pression d'étanchéification (AD) pour une rainure (421) et une bague d'étanchéité (6) dimensionnées de manière correspondante, en raison de la déformabilité plastique du matériau de contenant intérieur, dans deux interstices (L1, L2) entre la bague d'étanchéité (6) et la première et la deuxième arête (421a, 421b) aux fins de l'étanchéification du volume de stockage (SV) ultérieur par rapport au contenant intérieur (2) ultérieur ;
de confection (150) du contenant intérieur (2) en reliant de manière adaptée au moins les deux calottes polaires (22) pour fournir le volume de stockage (SV) pour le contenant sous pression (1) ;
de fabrication (160) de la couche extérieure (3) sur le contenant intérieur (2) aux fins du renforcement du contenant sous pression (1) ; et
de placement (170) de la soupape (5) dans la pièce de raccordement de soupape (4) aux fins de la fermeture du contenant sous pression (1).

12. Procédé (100) selon la revendication 11, comprenant l'autre étape de la réalisation (180) d'un troisième bourrelet (24c) autour du cône étanche (41) sur face intérieure (41u) dirigée en direction du volume de stockage (SV) en raison de la déformabilité plastique du matériau de contenant intérieur.

13. Procédé (100) selon la revendication 11 ou 12, dans lequel la couche extérieure (3) est constituée d'un matériau composite à base de fibres et est enroulée sur le contenant intérieur (2) lors de l'étape de la fabrication (160).

14. Procédé (100) selon l'une quelconque des revendications 11 à 13, dans lequel le placement de la soupape (5) est effectué au moyen d'un vissage.

15. Procédé (100) selon l'une quelconque des revendications 11 à 14, dans lequel au moins les calottes polaires (22) sont soudées les unes aux autres aux fins de la confection du contenant intérieur (2).
